# EUROPÄISCHE PATENTSCHRIFT

(11) **EP 1 558 842 B1**
(45) Veröffentlichungstag und Bekanntmachung des Hinweises auf die Patenterteilung: **09.04.2008**
(21) Anmeldenummer: 02808088.5
(22) Anmeldetag: 08.11.2002
(51) Int. Cl.: F02M 25/07, F01N 3/20, F01N 3/28

(54) **ABGASANLAGE UND VERFAHREN ZU DEREN BETRIEB**
EXHAUST SYSTEM AND METHOD FOR OPERATING THE SAME
SYSTEME D'ECHAPPEMENT DE GAZ ET PROCEDE POUR LE FAIRE FONCTIONNER

(43) Veröffentlichungstag der Anmeldung: 03.08.2005
(73) Patentinhaber: Emitec Gesellschaft für Emissionstechnologie mbH, 53797 Lohmar (DE)
(72) Erfinder: NAGEL, Thomas, 51766 Engelskirchen/Bickenbach (DE); BERGMANN, Andrée, 99817 Eisenach-Hötzelsroda (DE)
(74) Vertreter: Kahlhöfer, Hermann
(86) Internationale Anmeldenummer: PCT/EP2002/012472
(87) Internationale Veröffentlichungsnummer: WO 2004/042222

(56) Entgegenhaltungen:
- EP-A- 0 128 299
- GB-A- 2 161 212
- US-A- 3 855 980
- US-A- 5 357 908
- PATENT ABSTRACTS OF JAPAN vol. 1997, no. 04, 30. April 1997 (1997-04-30) -& JP 08 338320 A (HINO MOTORS LTD), 24. Dezember 1996 (1996-12-24) -& DATABASE WPI Section Ch, Week 199710 Derwent Publications Ltd., London, GB; Class H06, AN 1997-194299 XP002246420 & JP 08 338320 A (HINO MOTORS LTD), 24. Dezember 1996 (1996-12-24)
- PATENT ABSTRACTS OF JAPAN vol. 2000, no. 08, 6. Oktober 2000 (2000-10-06) -& JP 2000 146465 A (USUI INTERNATL IND CO LTD), 26. Mai 2000 (2000-05-26)
- PATENT ABSTRACTS OF JAPAN vol. 2000, no. 05, 14. September 2000 (2000-09-14) -& JP 2000 045881 A (TOYOTA MOTOR CORP), 15. Februar 2000 (2000-02-15)

## Beschreibung

Die vorliegende Erfindung betrifft eine Abgasanlage einer mobilen Verbrennungskraftmaschine sowie ein Verfahren zu deren Betrieb. Hierunter sind grundsätzlich alle Arten von Abgasanlagen zu verstehen, z.B. für Ottomotoren, Dieselmotoren oder sonstige Motorarten, bei denen ein kohlenstoffhaltiger Brennstoff verbrannt wird.

Abgasanlagen für mobile Verbrennungskraftmaschinen sind in vielen Ausgestaltungen bekannt. Eine Abgasanlage mit einer Abgasrückführleitung ist beispielsweise in der JP 08-338320 A beschrieben. Dort wird vorgeschlagen, dass das Abgas in die Abgasrückführleitung einströmt, wobei mittels einer Drosselklappe die Menge des Abgases auch unter Berücksichtigung der Temperatur des Abgases geregelt wird. Das Abgas durchströmt dabei einen Oxidationskatalysator sowie einen Partikelfilter, die hintereinander in der Abgasrückführleitung angeordnet sind. Zur Verbesserung der Katalyse dieser Abgasströme ist der nachgelagerte Partikelfilter ebenfalls als Oxidationskatalysator ausgeführt.

Kohlenwasserstoffgemische werden in großen Mengen hergestellt und verbraucht. Kohlenwasserstoff ist die Bezeichmung für eine organische Verbindung, die nur aus den Elementen Kohlenstoff und Wasser besteht. Die kurzkettigen Kohlenwasserstoffe mit bis zu vier Kohlenstoffatomen sind bei Raurmternperatur gasförmig. Ab Pentan (C₅) sind die Kohlenwasserstoffe bei Raumtemperatur flüssig. Langkettige Kohlenwasserstoffe ab Heptadekan (C₁₇) sind feste, wachsartige Stoffe. Die Gewinnung der verschiedenen Kohhlenwasserstoffe erfolgt in der Regel durch Destillation von Erdölen oder fossilen Brennstoffen. Den größten Anteil am Gesamtaufkommen machen in Deutschland die Kraftstoffe (Benzin und Diesel) für den Automobilyerkehr aus. Benzin ist je nach Herkunft und Verarbeitung verschiedenartig zusammengesetzt und ist ein Gemisch von aliphatischen Kohlenwasserstoffen (C₅ bis C₁₂), oft mit ungesättigten Naphthenen und Aromaten versetzt.

Hinsichtlich der Bereitstellung von höherwertigem Kraftstoff für Motoren im Automobilbereich ist es bekannt, Mittel vorzusehen, die eine Umwandlung des Kraftstoffs hin zu höheren Oktanzahlen ermölichen So gehen beispielsweise aus den Dokumenten US 3,855,980 und US 5,357,908 katalytisch wirksame Crack-Reaktoren hervor, welche langkettige Kohlenwasserstoffe im Kraftstoffgemisch kracken (oder "cracken") bzw. hin zu kurzkettigen Kohlenwasserstoffen umwandeln. Motivation hierfür war, eine möglichst effektive Verbrennung des Kraftstof-fes bei geringen Schadstoffemissionen zu verwirklichen. Ein Problem lag aber darin, dass die Lagerung und/oder der Transport der kurzkettigen und leicht entflammbaren Spezies der Kohlenwasserstoffe zu gefährlich war, um diese direkt als Treibstoff anzubieten.

In Anbetracht der Tatsache, dass neuere Benzin- bzw. Dieselkraftstoffe mit relativ hohen Oktan- bzw. Cetanzahlen geliefert werden, und zudem die Schadstoffemissionen effektiv durch verschiedenste Komponenten der Abgasanlage reduziert werden, besteht derzeit keine Veranlassung, den der Verbrennungskraftmaschine zugeführten Kraftstoff zu kracken.

Bei dem Betrieb von Abgasanlagen, welche mit Durchflussregulierern versehen sind (wie z.B. Drosselklappen, Ventile, etc.) oder aber Komponenten zur Abgasbehandlung (wie beispielsweise Mischer, Strömungsleitbleche und dergleichen) aufweisen, sind gelegentlich relativ frühzeitige Ausfälle oder Benutzungseinschränkungen hinsichtlich der vorgenannten Bauteile festzustellen. So kommt es beispielsweise vor, dass sich Drosselklappen nicht mehr komplett schließen, Ventile (insbesondere rotierende Tellerventile) nicht mehr über den gesamten Stellbereich verfahren, Strömungsabrisse an Strömungsleitflächen zu erkennen sind oder sich Mischer zusetzen. All diese Veränderungen haben einen erheblichen Einfluss auf die sensible Abstimmung der einzelnen Komponenten im Abgasstrang. Diese Probleme treten besonders in Teilabschnitten des Abgassystems auf, in denen eine relativ niedrige Temperatur (insbesondere kleiner 300°C) anliegt.
Aufgabe der vorliegenden Erfindung ist es, eine Abgasanlage für eine mobile Verbrennungskraftmaschine anzugeben, welche die vorstehenden Probleme löst. Außerdem soll die Abgasanlage einfach aufgebaut und preiswert sein. Weiter soll ein Verfahren zum Betrieb einer Abgasanlage vorgeschlagen werden, welches die Funktionssicherheit der Komponenten im Abgassystem gewährleistet.

Diese Aufgaben werden gelöst durch eine Abgasanlage mit den Merkmalen des Patentanspruchs 1 sowie einem Verfahren zum Betrieb einer Abgasanlage gemäß den Merkmalen des Patentanspruchs 9. Weitere vorteilhafte Ausgestaltungen der Abgasanlage beziehungsweise des Verfahrens sind in den jeweils abhängigen Patentansprüchen beschrieben. An dieser Stelle -sei darauf hingewiesen, dass die Merkmale der jeweils abhängigen Ansprüche beliebig miteinander sowie mit den Merkmalen des unabhängigen Patentanspruchs kombiniert werden können.

Die erfindungsgemäße Abgasanlage für eine mobile Verbrennungskraftmaschine umfasst zumindest eine Abgasleitung, welche wenigstens einen katalytisch aktiven Reaktionsraum hat, in dem im Abgas enthaltene langkettige Kohlenwasserstoffe gekrackt werden.

Wie aufwendige Untersuchungen von verschiedenen Komponenten des Abgassystems gezeigt haben, ist die Ursache für die obengenannten Probleme unter anderem in klebrigen, wachsartigen Verkokungen zu sehen, die sich insbesondere im Bereich von kleinen Spalten oder Zwickeln anlagern. Dabei sind bewegte Teile wie Drosselklappen oder Ventile besonders gefährdet. Die Anlagerung der Verkokung im Bereich des Hub- bzw. Rotationsweges der Drosselklappen und Ventile führt dazu, dass diese in ihrer Bewegungsfreiheit eingeschränkt werden. Die Ursache für die Verkokung sind häufig langkettige Kohlenwasserstoffe die in diesem Bereich zunächst ein Agglomerat bilden und anschließend beispielsweise zum Verkleben von bewegten Teilen führen.

Es wird nun vorgeschlagen, in die Abgasleitung wenigstens einen katalytisch aktiven Reaktionsraum zu integrieren, in dem langkettige Kohlenwasserstoffe gekrackt werden. Der Reaktionsraum selbst kann Teil der Abgasanleitung sein, beispielsweise indem die Innenfläche der Abgasleitung mit einer entsprechenden katalytisch aktiven Beschichtung versehen wird; es ist aber auch möglich, den Reaktionsraum, als Baueinheit in innere Bereiche der Abgasleitung zu integrieren. Die Position des mindestens einen Reaktionsraumes ist grundsätzlich frei wählbar, wobei dennoch gewährleistet sein sollte, dass der Katalysator auch schon in der Kaltstartphase der Verbremungskraftmaschine aktiv ist. Unter Kaltstartphase wird in diesem Zusammenhang der Zeitraum veistanden, welcher sich vom (Wieder-)Start der Verbrennungskrafbnaschine bis zum Erreichen der Anspringtemperatur des Hauptkatalysators im Abgassystem erstreckt. Die Anspringtemperatur des Hauptkatalysators liegt üblicherweise im Bereich von 260° bis 350° C.

Dabei umfasst der wenigstens eine Reaktionsraum einen Katalysator, der eine solch hohe Acidität hat, dass dieser bereits bei Temperaturen kleiner 230° C, insbesondere kleiner 100° C, langkettige Kohlenwasserstoffe krackt. Bei mehreren Versuchen hat sich herausgestellt, dass eine erhöhte Acididät des Katalysators zu einer unerwartet deutlichen Absenkung der Rcaktionstemporatur hinsichtlich der Spaltung langkettiger Kohlenwasserstoffe führt. Erfindungsgemäß umfasst der Katalysator ein aktiviertes Alumosilicat. Unter Umständen ist es auch vorteilhaft, dass der Katalysator Bortrifluorid und/oder Antimonpentafluorid umfasst. Als Katalysator für die Spaltung und/oder Oxidation des langkettigen Kohlenwasserstoffs wird z.B. ein röntgenamorphes Aluminosilicat (Al₂O₃/SiO₂) eingesetzt. Zur Erhöhung der Säurestärke/Acidität oder Aktivierung des Katalysators wird z.B. noch ein Zeolith-Ionenaustauscher, der z.B. mit einem Seltenerdmetall belegt ist, und/oder einem Edelmetall wie Platin auf einem aciden Träger wie Aluminiumtrichlorid (AlCl₃) zugegeben. Schließlich können auch supersauere Katalysatoren wie Bortrifluorid (BF₃) und/oder Antimonpentafluorid (SbF₅) zur Aktivierung des Alumosilicats eingesetzt werden. Außerdem werden bei Einsatz von Platin auf Aluminiumtrichlorid zur Aktivierung des Alumosilicats Reaktionstemperaturen von 80° C bis 200° C und Wartungsperioden von bis zu zwei Jahren erreicht.

Gemäß einer weiteren Ausgestaltung der Abgasanlage wird vorgeschlagen, dass der wenigstens eine Reaktionsraum zumindest einen Wabenkörper umfasst, der als Trägerkörper für den Katalysator dient. Unter einem Wabenkörper wird ein Bauteil verstanden, welches eine Vielzahl von für das Abgas durchströmbare Kanäle aufweist. Derartige Nabenkörper können aus einer Vielzahl unterschiedlicher, hochtemperaturfester Materialien hergestellt werden. Diesbezüglich sei auf bekannte Wabenkörper zur Abgasbehandlung verwiesen. Grundsätzich sind derartige Wabenkörper aus Metall oder Keramik herstellbar. Alternativ zum Wabenkörper können selbstverständlich eine Vielzahl weiterer oberflächenvergrößernder Bauteile im Reaktionsraum angeordnet sein, wie beispielsweise Siebe, Gestricke, Gewebe oder dergleichen.

Im Hinblick auf den Wabenkörper ist es besonders vorteilhaft, dass dieser eine Mehrzahl von zumindest teilweise strukturierten Blechlagen aufweist, die so gestapelt und/oder gewunden sind, dass für das Abgas durchströmbare Kanäle gebildet sind. Die Verwendung metallischer Blechlagen zur Herstellung von Wabenkörpern hat den Vorteil, dass diese besonders dünnwandig hergestellt werden können. So werden beispielsweise Blechlagen mit einer Dicke von 12 bis 50 µm eingesetzt, wobei Kanaldichten über die Querschnittsfläche der Wabenstruktur erzielt werden, die im Bereich von 200 bis 800 cpsi (cells per square inch) liegen. Die strukturierten Blechlagen bilden bevorzugt im wesentlichen parallel zueinander angeordnete Kanäle, wobei unter Umständen Mikrostrukturen zur Erzeugung von Turbulenzen, Öffnungen zum Gasaustausch in benachbarten Kanälen sowie variierende Blechlagendicken vorgesehen sein können.

Gemäß einer weiteren Ausgestaltung der Abgasanlage ist zumindest ein Reaktionsraum in Strömungsrichtung des Abgases vor einem Ventil angeordnet. Dies ist insbesondere dann vorteilhaft, wenn das Ventil Teil eines Abgasrückführungssystems ist und den Abgasdurchfluss einer Abgasrückführungsleitung regelt. Das bedeutet mit anderen Worten, dass der Teilabgasstrom, welcher durch das Abgasrückführungssystem hindurchgeleitet wird, zunächst von langkettigen Kohlenwasserstoffen befreit wird, indem eine entsprechende katalytische Reaktion beim Durchströmen des mindestens einen Reaktionsraumes stattfindet. Das Abgasrückführungssystem ist hinsichtlich der Agglomeration von klebrigen Verkokungen nahe dem Ventil besonders gefährdet, da in diesem Teil des Abgassystems in der Regel relativ niedrige Temperaturen herrschen. Das hat einerseits seinen Ursprung darin, dass das Abgasrückführungssystem üblicherweise besonders in der Kaltstartphase zum Einsatz gelangt, in der das Abgas selbst noch nicht ausreichend hohe Temperaturen hat, sowie darin, dass nur relativ geringe Abgasmassenströme hindurchgeleitet werden, so dass eine Wärmeabgabe hin zur Abgasrückführungsleitung schnell stattfindet. Insofern ist die Anordnung eines solchen Reaktionsraumes gerade im bzw. nahe dem Abgasrückführungssystem besonders effektiv hinsichtlich der Funktionalität des Ventils im Abgasrückführungssystem.

Um sicherzustellen, dass auch nach längerem Betrieb der Reaktionsraum katalytisch aktiv ist, wird vorgeschlagen, dass in Strömungsrichtung des Abgases vor dem wenigstens einen Reaktionsraum ein Abgaskühler angeordnet ist und/oder der wenigstens eine Reaktionsraum selbst kühlbar ist. Wie bereits eingangs beschrieben, steht insbesondere das Kracken langkettiger Kohlenwasserstoffe bei niedrigen Temperaturen im Vordergrund. Hierbei werden üblicherweise Katalysatoren eingesetzt, die in einem Temperaturbereich unterhalb von 200° C wirksam sind, die jedoch bei deutlich höheren Temperaturen keine ausreichende katalytische Aktivität mehr zeihen. Zu diesem Zweck wird vorgeschlagen, dass der Katalysator im Reaktionsraum auf Temperaturen kleiner 200° C gehalten wird, auch wenn das (ungekühlte) Abgas bereits deutlich höhere Temperaturen aufweist. Hinsichtlich der Ausgestaltung eines Abgaskühlers können dem Fachmann bekannte Wärmetauscher eingesetzt werden. Dabei ist es einerseits denkbar, dass der Abgaskühler in die Abgasleitung selbst integriert ist, oder ein separates Bauteil ist, welches im Inneren der Abgasleitung oder um sie herum angeordnet ist. Die Kühlung des Reaktionsraums selbst kann beispielsweise durch Kühlschlangen bewirkt werden, die von außen um den Reaktionsraum angebracht werden.

Gemäß einer weiteren Ausgestaltung der Abgasanlage hatte der wenigstens eine Reaktionsraum ein Volumen, dass kleiner als 0,8 1 (Liter) beträgt, insbesondere kleiner 0,5 1 und bevorzugt sogar kleiner 0,2 1. Die Größe des Volumens ist unter anderem auch durch den Abgasmassendurchsatz bestimmt. Das bedeutet, dass entsprechend der Anordnung in Teilabgasströmen oder Hauptabgasströmen ein entsprechend großes Volumen vorzusehen ist. Weiter ist von Bedeutung, wie hoch der Anteil von langkettigen Kohlenwasserstoffen im Abgas ist. Weitere Kriterien zur Auslegung des Volumens können die Art des Katalysators, die Sensibilität der nachgeschalteten Komponenten hinsichtlich der Verkokungsneigung und/oder die Temperatur des Abgases an der Stelle sein.

Weiter wird vorgeschlagen, dass die Abgasanlage Komponenten zur Umsetzung von im Abgas enthaltenen Schadstoffen aufweist, die dem mindestens einen Reaktionsraum vor- und/oder nachgeschaltet sind. Mit Komponenten der Abgasanlage sind insbesondere bekannte Filter, Partikelfallen, Heizelemente, Wärmetauscher Adsorber, katalytische Konverter etc. gemeint. Dabei ist es besonders vorteilhaft, dass der Reaktionsraum im wesentlichen nur die Aufgabe des Spaltens beziehungsweise Krackens von langkettigen Kohlenwasserstoffen hat, während die tatsächliche Umwandlung von Schadstoffen wie Kohlenmonxid, Stickoxide, usw. den vorgenannten Komponenten zuzuschreiben ist

Gemäß einem weitern Aspekt der Erfindung wird ein Verfahren zum Betrieb einer Abgasanlage vorgeschlagen, wie sie oben erfindungsgemäß beschrieben wurde. Hinsichtlich des Verfahrens wird vorgeschlagen, dass das Abgas durch wenigstens einen katalytisch aktiven Reaktionsraum geführt wird indem im Abgas enthaltene langkettige Koblenwasserstoffe gekrackt werden. Dadurch wird gewährleistet, dass Komponenten des Abgassystems, welche eine hohe Neigung zur Verkokung haben, wie beispielsweise Drosselklappen, Ventile etc., über einen sehr langen Zeitraum einwandfrei funktionieren. Dies führt zu einer besonders hohen Wartungsfreundlichkeit und Effektivität der Abgasanlage.

Dabei wird das im Reaktionsraum zumindest teilweise gekrackte Abgas einen Abgasrückführungssystem zugeführt, welches einen Teilabgasstrom wieder einer Verbrennungskraftmaschine zuführt. Das hat den Vorteil, dass so wiederum nur kurzkettige Kohlenwasserstoffe der Verbrennungskraftmaschine bereitgestellt werden, und diese eine effektive und schadstoffarme Verbrennung durchführen kann.

Gemäß einer weiteren Ausgestaltung des Verfahrens wird vorgeschlagen, dass das in den Reaktionsraum eintretende Abgas und/oder der Reaktionsraum selbst so gekühlt wird, dass im Reaktionsraum Temperaturen unterhalb von 230°C (bevorzugt kleiner 150°C oder sogar kleiner 100°C) während des Betriebes sichergestellt sind. Insbesondere bei einer solchen Verfahrensweise ist es vorteilhaft, dass in dem wenigstens einen Reaktionsraum mindestens 50 %, insbesondere mindestens 80 % der im Abgas enthaltenen langkettigen Kohlenwasserstoffe gekrackt werden, wobei in der Reaktionskammer bevorzugt Normaldruck herrscht. Das hat einerseits zur Folge, dass der Reaktionsraum selbst in der Regel nicht verklebt und somit nur in sehr großen Wartungszeiträumen kontrolliert werden muss, andererseits aber auch die Verkokung bei nachgeordneten Komponenten verhindert wird.

Gemäß einer weiteren Ausgestaltung des Verfahrens wird vorgeschlagen, dass das Abgas nach Durchströmen des wenigstens einen Reaktionsraumes lediglich kurzkettige Kohlenwasserstoffmoleküle enthält, die weniger als 10 Kohlenstoffatome aufweisen.

Die Erfindung wird nachfolgend anhand der Figuren näher erläutert. Dabei sei darauf hingewiesen, dass die dargestellten Ausführungsbeispiele lediglich besonders bevorzugte Varianten der Erfindung darstellen. Die Erfindung jedoch nicht auf diese begrenzt ist:

Es zeigen:
- Fig. 1: Schematisch eine Ausgestaltung der erfindungsgemäßen Abgasanlage;
- Fig. 2: schematisch und perspektivisch eine Variante eines Reaktionsraumes 4 und
- Fig. 3: schematisch den Aufbau einer Beschichtung des Reaktionsraumes.

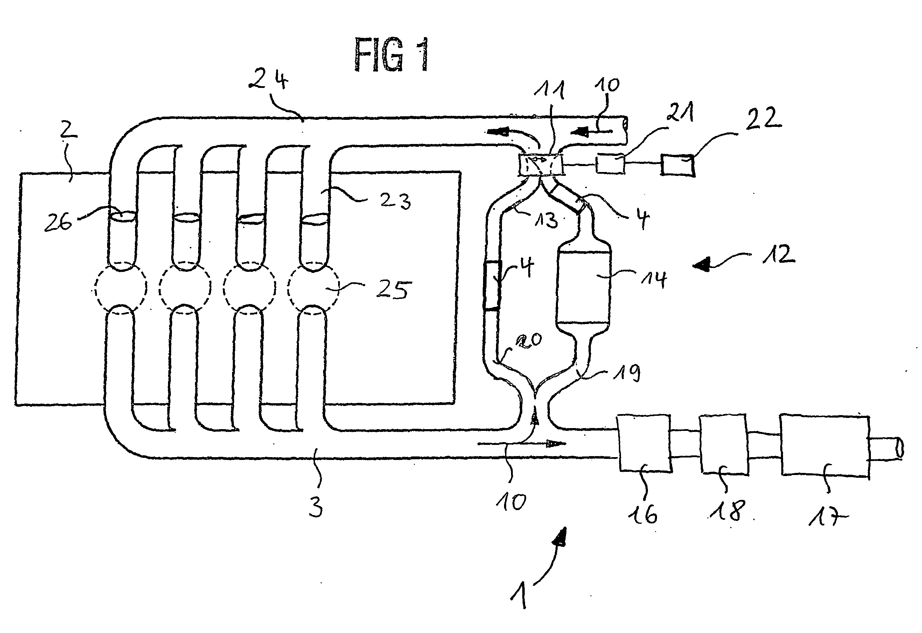

Figur 1 zeigt schematisch den Aufbau einer Abgasanlage 1 mit einem Abgasrückführungssystem 12 und einer Verbrennungskraftmaschine 2. Das Abgasrückführungssystem 12 ist zweisträngig ausgebaut, umfasst also einen Ersten Strang 19 und einen zweiten Strang 20, wobei im Ersten Strang 19 ein Abgaskühler 14 angeordnet ist, der insbesondere bei hohen Temperaturen des Abgases eine Kühlung des ihn durchströmenden Teilabgasstromes bewirkt. Die Regulierung der Strömungsrichtung 10 im Abgasrückführungssystem 12 erfolgt über ein Ventil 11, das bevorzugt als rotierende Doppelklappe ausgeführt ist, wobei dessen Antrieb 21 mit einer Steuereinheit 22 verbunden ist, so dass sich vorgebbare Teilabgasströme erzeugen lassen.

Prinzipiell wird ein Treibstoff-Luft-Gemisch über die Ansaugluftleitung 24 und den Drosselklappen 26 der Verbrennungskraftmaschine 2 zugeführt. Dabei kommt es gerade in der Kaltstartphase der Verbrennungskraftmaschine 2 mit einem Abgasrückführungssystem 12 zu Verkokungen an den Zuführleitungen 24 des Brennstoff-Luft-Gemisches mit dem zurückgeführten Abgas, insbesondere nahe dem Ventil 11. Weiter sind insbesondere die Drosselklappen 26, die Ventile in den Brennräumen 25 oder andere Bereiche der Zuführleitungen 23 betroffen, die zumindest zeitweise nur einen relativ kleinen freien Strömungsquerschnitt begrenzen. In den Brennräumen 10 der dargestellten Verbrennungskraftmaschine 2 erfolgt die Verbrennung des Treibstoff-Luft-Gemisch, wobei Abgase enthaltend beispielsweise Kohlenwasserstoffen, Kohlenmonoxide, Kohlendioxide, und Stickoxide entstehen, die anschließend über eine Abgasleitung 3 weitergeleitet werden. Die im Abgas enthaltenen Schadstoffe werden in einer stromabwärts angeordneten Reinigungsanlage zum Teil katalytisch umgesetzt bevor sie an die Umgebung abgelassen werden. Hierzu dienen beispielsweise die dargestellten Komponenten Filter 16, Adsorber 18 und katalytischer Konverter 17.

Die dargestellte Vorrichtung umfasst zwei Reaktionsräume 4 zur katalytischen Oxidation und/oder Spaltung von langkettigen Kohlenwasserstoffen, bei der in den Reaktionsräumen 4 ein Katalysator 5 (nicht dargestellt) auf einen inerten Träger (nicht dargestellt) aufgebracht wird. Die Reaktionsräume 4 ist stromabwärts einer Verbrennungskraftmaschine 2 angeordnet, und demnach wird das die Reaktionsräume 4 durchströmendes Fluid in Strömungsrichtung 10 hin zur Verbrennungskraftmaschine 2 geleitet. Da der Katalysator (nicht dargestellt) eine so hohe Acidität hat, werden die langkettigen Kohlenwasserstoffen bereits bei Temperaturen kleiner 100°C umwandelt. In dem dargestellten Ausführungsbeispiel sind die Reaktionsräume 4 in beiden Abgasrückführungsleitungen 13 des zweisträngig ausgeführten Abgasrückführungssystem 12 angeordnet ist, wobei das durchströmende Fluid ein zurückzuführender Teilabgasstrom der Verbrennungskraftmaschine 2 ist.

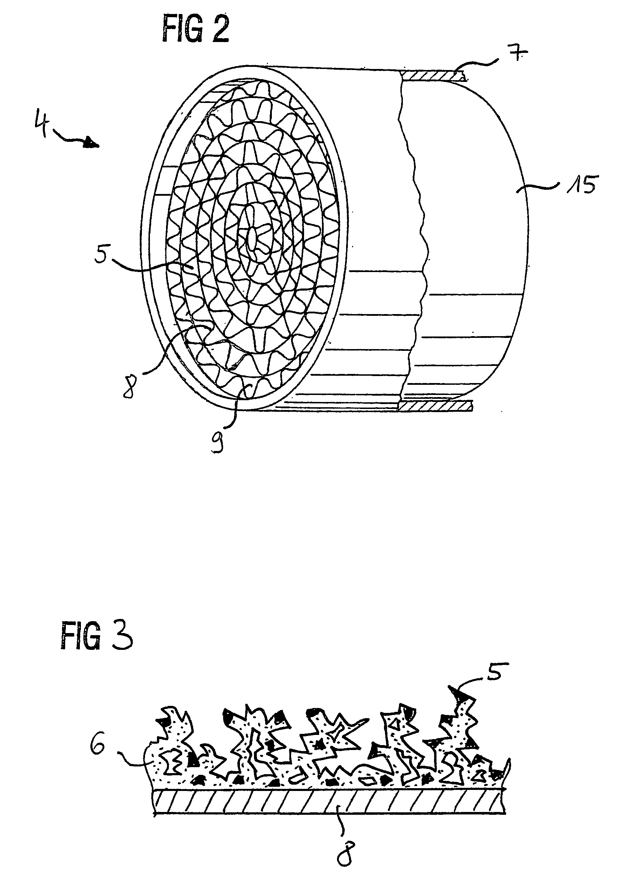

Figur 2 zeigt schematisch und perspektivisch eine Ausrührungsform des Reaktionsraumes 4, wobei auf einem Wabenkörper 7 ein Katalysator 5 aufgebracht ist. Der Wabenkörper 7 ist als separates Bauteil in dem Reaktionsraum 4 ausgeführt ist, wobei mit zumindest teilweise strukturierte Blechlagen 8 ein metallischen Wabenkörper 7 mit für das Fluid durchströmbaren Kanälen 9 gebildet ist. Der Reaktionsraum 4 hat ein Volumen 15 von ca. 0,5 Litern (hierbei ist das äußere Gesamtvolumen mit Wandstrukturen und Kanälen 9 gemeint) und ist nahe der Verbindung zwischen dem Abgasrückführungssystem 12 (nicht dargestellt) und der Ansaugluftleitung 24 (nicht dargestellt) angeordnet, so dass die langkettigen Kohlenwasserstoffe bei einer beliebigen Stellung des Ventils 11 (nicht dargestellt) stets den gesamten zurückzuführenden Teilabgasstrom gespalten bzw. katalytisch umgesetzt werden.

Figur 3 zeigt schematisch den Aufbau einer Beschichtung des Reaktionsraumes 4. Im Detail ist ein Stück einer Blechlage 8 des Wabenkörpers 7 dargestellt, auf dem die Beschichtung hochtemperaturfest aufgetragen ist. Die Beschichtung weist eine extrem zerklüftete Oberfläche auf, wie sie für Zeolithe charakteristisch ist. Die Beschichtung ist mit einem Katalysator 5 dotiert und umfasst Alumosilicat 6. Vorliegend ist der Katalysator 5 ein aktiviertes Alumosilicat 6, wobei er zusätzlich Bestandteile von Bortrifluorid und/oder Antimonpentafluorid umfasst.

Durch das Spalten der Kohlenwasserstoffe des Treibstoffs wird dieser zudem besser zugänglich und sein chemischer Energieinhalt besser nutzbar gemacht. Daraus resultiert auch eine Verringerung des spezifischen Kraftstoffverbrauchs. Die langkettigen Kohlenwasserstoffe des Benzins, wie z.B. Dekan, können mit Hilfe dieses Verfahrens erstmals im Fahrzeug in die kurzkettigen Alkane und bei zusätzlich erfolgter Dehydrierung auch in die Alkene überführt werden, was zu einer verbesserten Octanzahl des Benzins führt.

### Bezugszeichenliste

- 1: Abgasanlage
- 2: Verbrennungskraftmaschine
- 3: Abgasleitung
- 4: Reaktionsraum
- 5: Katalysator
- 6: Alumosilicat
- 7: Wabenkörper
- 8: Blechlage
- 9: Kanal
- 10: Strömungsrichtung
- 11: Ventil
- 12: Abgasrückführungssystem
- 13: Abgasrückführungsleitung
- 14: Abgaskühler
- 15: Volumen
- 16: Filter
- 17: Katalytischer Konverter
- 18: Adsorber
- 19: Erster Strang
- 20: Zweiter Strang
- 21: Antrieb
- 22: Steuereinheit
- 23: Zuführleitung
- 24: Ansaugluftleitung
- 25: Brennraum
- 26: Drosselklappe

## Patentansprüche

1. Abgasanlage (1) für eine mobile Verbrennungskraftmaschine (2) umfassend zumindest eine Abgasleitung (3), wobei die Abgasleitung (3) wenigstens einen katalytisch aktiven Reaktionsraum (4) mit einem Katalysator (5) hat, in dem im Abgas enthaltene langkettige Kohlenwasserstoffe gekrackt werden, wobei der Katalysator (5) ein aktiviertes Alumosilicat (6) umfasst und eine solch hohe Acidität hat, dass dieser bereits bei Temperaturen kleiner 230° Celsius, insbesondere kleiner 100° Celsius, langkettige Kohlenwasserstoffe krackt.

2. Abgasanlage (1) nach Anspruch 1, **dadurch gekennzeichnet, dass** der wenigstens eine Reaktionsraum (4) zumindest einen Wabenkörper (7) umfasst, der als Trägerkörper für den Katalysator (5) dient

3. Abgasanlage (1) nach Anspruch 2, **dadurch gekennzeichnet, dass** der Wabenkörper (7) eine Mehrzahl von zumindest teilweise strukturierten Blechlagen (8) aufweist, die so gestapelt und/oder gewunden sind, dass für das Abgas durchströmbare Kanäle (9) gebildet sind.

4. Abgasanlage (1) nach einem der vorhergehenden Ansprüche, **dadurch gekennzeichnet, dass** ein Reaktionsraum (4) in Strömungsrichtung (10) des Abgases vor einem Ventil (11) angeordnet ist.

5. Abgasanlage (1) nach Anspruch 4, **dadurch gekennzeichnet, dass** das Ventil (11) Teil eines Abgasrückführungssystems (12) ist und den Abgasdurchfluss einer Abgauückführungsleitung (13) regelt.

6. Abgasanlage (1) nach einem der vorhergehenden Ansprüche, **dadurch gekennzeichnet, dass** in Strömungsrichtung (10) des Abgases vor dem wenigstens einen Reaktionsraum (4) ein Abgaskühler (14) angeordnet ist und/oder der wenigstens eine Reaktionsraum (4) selbst kühlbar ist.

7. Abgasanlage (1) nach einem der vorhergehenden Ansprüche, **dadurch gekennzeichnet, dass** der wenigstens eine Reaktionsraum (4) ein Volumen (15) hat, dass kleiner als 0,8 Liter beträgt, insbesondere kleiner 0,5 Liter und bevorzugt sogar kleiner 0,2 Liter.

8. Abgasanlage (1) nach einem der vorhergehenden Ansprüche, **dadurch gekennzeichnet, dass** die Abgasanlage (1) Komponenten (16, 17, 18) zur Umsetzung von im Abgas enthaltenen Schadstoffen aufweist, die dem mindestens einen Reaktionsraum (4) vor und/oder nachgeschaltet sind.

9. Verfahren zum Betrieb einer Abgasanlage (1) für eine mobile Verbrennungskraftmaschine (2) nach einem der vorhergehenden Ansprüche, bei dem das Abgas durch wenigstens einen katalytisch aktiven Reaktionsraum (4) geführt wird, in dem im Abgas enthaltene langkettige Kohlenwasserstoffe gekrackt werden und bei dem das im Reaktionsraum (4) zumindest teilweise gekrackte Abgas einem Abgasrückführungssystem (12) zugeführt wird, welches einen Teilabgasstrom wieder einer Verbrennungskraftmaschine (2) zuführt.

10. Verfahren nach Anspruch 9, bei dem das in den Reaktionsraum (4) eintretende Abgas und/oder der Reaktionsraum (4) selbst so gekühlt wird, dass im Reaktionsraum (4) Temperaturen unterhalb von 230° Celsius während des Betriebes sichergestellt sind.

11. Verfahren nach Anspruch 9 oder 10, bei dem in dem wenigstens einen Reaktionsraum (4) mindestens 50 %, insbesondere mindestens 80 % der im Abgas enthaltenen langkettigen Kohlenwasserstoffe gekrackt werden, wobei in der Reaktionskammer (4) bevorzugt Normaldruck herrscht.

12. Verfahren nach einem der Ansprüche 9 bis 11, bei dem das Abgas nach Durchströmen des wenigstens einen Reaktionsraums (4) lediglich kurzkettige Kohlenwasserstoff-Moleküle enthält, die weniger als 10 Kohlenstoffatome aufweisen.

## Claims

1. An exhaust system (1) for a mobile combustion engine (2) comprising at least one exhaust pipe (3), wherein the exhaust pipe (3) has at least one catalytically active reaction space (4) that encloses a catalyst (5), in which long-chain hydrocarbons contained in the exhaust gas are cracked, wherein the catalyst (5) comprises an activated aluminum silicate (6) and has such a high acidity that it cracks long-chain hydrocarbons already at temperatures lower than 230° Celcius, in particular lower than 100° Celcius.

2. The exhaust system (1) as claimed in claim 1, **characterized in that** the at least one reaction space (4) encloses at least one honeycomb (7), which serves as a support for the catalyst (5).

3. The exhaust system (1) as claimed in claim 2, **characterized in that** the honeycomb (7) has a plurality of at least partially structured sheet metal layers (8), which are stacked and/or coiled in such a way that passages (9) through which the exhaust gas can flow are formed.

4. The exhaust system (1) as claimed in one of the preceding claims, **characterized in that** a reaction space (4) is arranged upstream of a valve (11) in the direction of flow (10) of the exhaust.

5. The exhaust system (1) as claimed in claim 4, **characterized in that** the valve (11) is part of an exhaust-gas recirculation system (12) and regulates the flow of exhaust through an exhaust-gas recirculation pipe (13).

6. The exhaust system (1) as claimed in one of the preceding claims, **characterized in that** an exhaust-gas cooler (14) is arranged upstream of the at least one reaction space (4) in the direction of flow (10) of the exhaust and/or the at least one reaction space (4) itself can be cooled.

7. The exhaust system (1) as claimed in one of the preceding claims, **characterized in that** the at least one reaction space (4) has a volume (15) which is less than 0.8 liters, in particular less than 0.5 liters and preferably even less than 0.2 liters.

8. The exhaust system (1) as claimed in one of the preceding claims, **characterized in that** the exhaust system (1) has components (16, 17, 18) for converting harmful substances contained in the exhaust, which are arranged upstream and/or downstream of the at least one reaction space (4).

9. A method for operating an exhaust system (1) for a mobile combustion engine (2) as claimed in one of the preceding claims, in which the exhaust gas is passed through at least one catalytically active reaction space (4) in which long-chain hydrocarbons contained in the exhaust are cracked, and in which the exhaust gas that is at least partially cracked in the reaction space (4) is fed to an exhaust-gas recirculation system (12), which returns a partial stream of exhaust to a combustion engine (2).

10. The method as claimed in claim 9, in which the exhaust gas entering the reaction space (4) and/or the reaction space (4) itself is cooled in such a way that temperatures below 230° Celsius are ensured in the reaction space (4) during operation.

11. The method as claimed in one of claims 9 or 10, in which at least 50%, in particular at least 80%, of the long-chain hydrocarbons contained in the exhaust are cracked in the at least one reaction space (4), normal pressure preferably prevailing in the reaction chamber (4).

12. The method as claimed in one of claims 9 to 11, in which, after flowing through the at least one reaction space (4), the exhaust only contains short-chain hydrocarbon molecules which have fewer than 10 carbon atoms.

## Revendications

1. Système de gaz d'échappement (1) pour une machine à combustion interne mobile (2), comprenant au moins une conduite de gaz d'échappement (3), la conduite de gaz d'échappement (3) ayant au moins un espace de réaction à activité catalytique (4) avec un catalyseur (5), dans lequel des hydrocarbures à chaîne longue, se trouvant dans le gaz d'échappement, sont craqués, dans quel cas le catalyseur (5) comprend un aluminosilicate activé (6) et a une acidité aussi élevée que celui-ci craque des hydrocarbures à chaîne longue déjà à des températures en dessous de 230°Celsius, notamment en dessous de 100°Celsius.

2. Système de gaz d'échappement (1) selon la revendication 1, **caractérisé en ce que** l'au moins un espace de réaction (4) comprend au moins un corps en nids d'abeilles (7) qui sert de corps support pour le catalyseur (5).

3. Système de gaz d'échappement (1) selon la revendication 2, **caractérisé en ce que** le corps en nids d'abeilles (7) a une pluralité de couches de tôle au moins partiellement structurées (8), qui sont empilées et/ou incurvées de manière telle que des canaux (9) sont formés à travers lesquels le gaz d'échappement peut s'écouler.

4. Système de gaz d'échappement (1) selon l'une quelconque des revendications précédentes, **caractérisé en ce qu'**un espace de réaction (4) est agencé en amont d'une valve (11) en direction d'écoulement (10) du gaz d'échappement.

5. Système de gaz d'échappement (1) selon la revendication 4, **caractérisé en ce que** la valve (11) fait partie d'un système de recyclage de gaz d'échappement (12) et règle l'écoulement du gaz d'échappement à travers une conduite de recyclage de gaz d'échappement (13).

6. Système de gaz d'échappement (1) selon l'une quelconque des revendications précédentes, **caractérisé en ce qu'**un refroidisseur de gaz d'échappement (14) est agencé en direction d'écoulement (10) du gaz d'échappement en amont de l'au moins un espace de réaction (4), et/ou l'au moins un espace de réaction (4) lui-même peut être refroidi.

7. Système de gaz d'échappement (1) selon l'une quelconque des revendications précédentes, **caractérisé en ce que** l'au moins un espace de réaction (4) a un volume (15) qui est plus petit que 0,8 litres, notamment plus petit que 0,5 litres et de préférence même plus petit que 0,2 litres.

8. Système de gaz d'échappement (1) selon l'une quelconque des revendications précédentes, **caractérisé en ce que** le système de gaz d'échappement (1) a des composants (16, 17, 18) pour la transformation de polluants contenus dans le gaz d'échappement, lesquels composants sont disposés en amont et/ou en aval de l'au moins un espace de réaction (4).

9. Procédé pour opérer un système de gaz d'échappement (1) pour une machine à combustion interne mobile (2) selon l'une quelconque des revendications précédentes, dans lequel le gaz d'échappement est guidé à travers au moins un espace de réaction à activité catalytique (4), dans lequel des hydrocarbures à chaîne longue contenus dans le gaz d'échappement sont craqués et dans lequel le gaz d'échappement craqué au moins partiellement dans l'espace de réaction (4) est alimenté dans un système de recyclage de gaz d'échappement (12) qui alimente un flux de gaz d'échappement partiel à nouveau dans une machine à combustion interne (2).

10. Procédé selon la revendication 9, dans lequel le gaz d'échappement entrant dans l'espace de réaction (4) et/ou l'espace de réaction (4) lui-même est refroidi de manière telle que des températures en dessous de 230°Celsius sont assurées durant l'opération.

11. Procédé selon la revendication 9 ou 10, dans lequel dans l'au moins un espace de réaction (4) au moins 50 %, notamment au moins 80 % des hydrocarbures à chaîne longue contenus dans le gaz d'échappement, sont craqués, dans l'espace de réaction (4) régnant de préférence de la pression normale.

12. Procédé selon l'une quelconque des revendications 9 à 11, dans lequel après avoir traversé l'au moins un espace de réaction (4) le gaz d'échappement ne contient que des molécules d'hydrocarbures qui ont moins que 10 atomes de carbone.
